# EUROPÄISCHE PATENTSCHRIFT

(11) **EP 1 280 865 B1**
(45) Veröffentlichungstag und Bekanntmachung des Hinweises auf die Patenterteilung: **03.11.2004**
(21) Anmeldenummer: 01945057.6
(22) Anmeldetag: 27.04.2001
(51) Int. Cl.: C09D 163/00, C09D 5/10, C09D 5/24

(54) **LEITFÄHIGE, ORGANISCHE BESCHICHTUNGEN**
CONDUCTIVE ORGANIC COATINGS
REVETEMENTS ORGANIQUES CONDUCTEURS

(30) Priorität: 06.05.2000 DE 10022075
(43) Veröffentlichungstag der Anmeldung: 05.02.2003
(73) Patentinhaber: Henkel Kommanditgesellschaft auf Aktien, 40589 Düsseldorf-Holthausen (DE)
(72) Erfinder: LORENZ, Wolfgang, 40699 Erkrath (DE); KUNZ, Andreas, 42855 Remscheid (DE); WILKE, Eva, 42781 Haan (DE)
(86) Internationale Anmeldenummer: PCT/EP2001/004779
(87) Internationale Veröffentlichungsnummer: WO 2001/085860

(56) Entgegenhaltungen:
- DE-A- 19 748 764
- US-A- 3 998 771
- US-A- 4 186 036

## Beschreibung

Die vorliegende Erfindung betrifft ein Verfahren zu Beschichtung von Metalloberflächen mit elektrisch leitfähigen organischen Beschichtungen.

In der metallverarbeitenden Industrie, insbesondere beim Bau von Kraftfahrzeugen müssen die metallischen Bestandteile der Erzeugnisse vor Korrosion geschützt werden. Nach herkömmlichem Stand der Technik werden dabei die Bleche im Walzwerk zunächst mit Korrosionsschutzölen beschichtet und vor der Verformung und dem Stanzen ggf. mit Ziehfetten beschichtet. Im Kraftfahrzeugbau werden dabei für die Karosserie bzw. Karosserieteile entsprechend geformte Blechteile ausgestanzt und unter Verwendung von besagten Ziehfetten oder -ölen im Tiefziehverfahren verformt, dann im allgemeinen durch Schweißen und/oder Bördeln und/oder Kleben zusammengefügt und anschließend aufwendig gereinigt. Daran schließen sich die korrosionsschützenden Oberflächenvorbehandlungen wie Phosphatierung und/oder Chromatierung an, worauf eine erste Lackschicht mittels Elektrotauchlackierung auf die Bauteile aufgebracht wird. In der Regel folgt dieser ersten Elektrotauchlackierung, insbesondere im Falle von Automobilkarosserien, die Aufbringung mehrerer weiterer Lackschichten.

In der metallverarbeitenden Industrie wie beispielsweise im Fahrzeug- und Haushaltsgerätebau besteht aus Gründen der Prozeßvereinfachung der Wunsch, den Aufwand für die chemische Korrosionsschutzbehandlung zu verringern. Dies kann dadurch geschehen, daß Rohmaterial in Form von Metallblechen oder Metallbändern eingesetzt wird, das bereits eine Korrosionsschutzschicht trägt.

Es besteht daher Bedarf, einfachere Herstellungsverfahren zu finden, bei denen bereits vorbeschichtete Bleche geschweißt und in bewährter Weise elektrotauchlackiert werden können. So gibt es eine Reihe von Verfahren, bei denen im Anschluß an eine Phosphatierung und/oder Chromatierung im sogenannten Coil-Coating-Verfahren eine mehr oder weniger leitfähige organische Beschichtung aufgebracht wird. Dabei sollen diese organischen Beschichtungen in der Regel so beschaffen sein, daß sie genügende elektrische Leitfähigkeit besitzen, um automobiltypische Schweißverfahren, beispielsweise elektrische Punktschweißverfahren nicht zu beeinträchtigen. Außerdem sollen diese Beschichtungen mit herkömmlichen Elektrotauchlacken beschichtbar sein.

Insbesondere in der Automobilindustrie werden dabei in neuerer Zeit neben normalen Stahlblechen vermehrt auch die nach den verschiedensten Verfahren verzinkten und/oder legierungsverzinkten Stahlbleche eingesetzt.

Die Beschichtung von Stahlblechen mit organischen Beschichtungen, die schweißbar sind und die direkt im Walzwerk nach dem sogenannten Coil-Coating-Verfahren aufgebracht werden, ist im Prinzip bekannt.

So beschreibt die DE-C-3412234 einen leitfähigen und schweißbaren Korrosionsschutzprimer für elektrolytisch dünnverzinktes, phosphatiertes oder chromatiertes und verformbares Stahlblech. Dieser Korrosionsschutzprimer besteht aus einer Mischung von über 60 % Zink, Aluminium, Graphit und/oder Molybdändisulfid sowie einem weiteren Korrosionsschutzpigment und 33 bis 35 % eines organischen Bindemittels sowie etwa 2 % eines Dispergierhilfsmittels oder Katalysators. Als organisches Bindemittel werden Polyesterharze und/oder Epoxidharze sowie deren Derivate vorgeschlagen. Es wird angenommen, daß diese Technologie die Grundlage des in der Industrie unter dem Namen "Bonazinc 2000" bekannten Beschichtungsmittels darstellt. Obwohl dieses Verfahren bereits einige Vorzüge gegenüber der eingangs geschilderten Vorgehensweise - vorübergehender Korrosionsschutz mit Korrosionsschutzölen, gefolgt von nachträglicher Entfettung nach dem Zusammenfügen der metallischen Bauteile - bietet, ist das in der DE-C-3412234 beschriebene Verfahren noch stark verbesserungsbedürftig:
- Die Beschichtung ist nicht ausreichend punktschweißbar.
- Die Lackhaftung auf den vorbehandelten Substraten, vorzugsweise verzinkte Stähle, ist nicht immer ausreichend, insbesondere wenn stärkere Umformungen der Bleche im Automobilpresswerk vorgenommen werden.

Gemäß der Lehre der DE-C-3412234 kann das organische Bindemittel aus Polyesterharzen und/oder Epoxidharzen sowie deren Derivaten bestehen. Konkret genannt werden ein Epoxid/Phenyl-Prekondensat, ein Epoxyester sowie lineare ölfreie Mischpolyester auf Basis Terephthalsäure.

Die EP-A-573015 beschreibt ein organisch beschichtetes Stahl-Verbundblech bestehend aus einer ein oder zweiseitig mit einer Zink oder Zinklegierung beschichteten Oberfläche, die mit einem Chromatfilm versehen ist und einer darauf befindlichen organischen Beschichtung mit einer Schichtstärke von 0,1 bis 5 µm. Die organische Beschichtung ist aus einer Primer-Zusammensetzung gebildet, die aus einem organischen Lösungsmittel, einem Epoxidharz mit einem Molekulargewicht zwischen 500 und 10.000, einem aromatischen Polyamin und einer Phenol- oder Cresolverbindung als Beschleuniger besteht. Weiterhin enthält die Primer-Zusammensetzung ein Polyisocyanat sowie kolloidale Kieselsäure. Gemäß der Lehre dieser Schrift wird die organische Beschichtung vorzugsweise in einer Trockenfilm-Schichtstärke von 0,6 bis 1,6 µm aufgebracht, da dünnere Schichten als 0,1 µm zu dünn sind um Korrosionsschutz zu bewirken. Schichtstärken über 5 µm beeinträchtigen jedoch die Schweißbarkeit. In analoger Weise beschreibt die DE-A-3640662 ein oberflächen behandeltes Stahlblech, umfassend ein zinküberzogenes oder mit einer Zinklegierung überzogenes Stahlblech, einem auf der Oberfläche des Stahlbleches gebildeten Chromatfilm und einer auf dem Chromatfilm gebildeten Schicht einer Harzzusammensetzung. Diese Harzzusammensetzung besteht aus einem basischen Harz, das durch Umsetzung eines Epoxidharzes mit Aminen hergestellt wird sowie einer Polyisocyanatverbindung. Auch dieser Film darf nur in Trockenfilmstärken von kleiner als etwa 3,5 µm aufgebracht werden, weil bei höheren Schichtstärken die Schweißfähigkeit stark herabgesetzt ist.

Die EP-A-380 024 beschreibt organische Beschichtungsmaterialien auf der Basis eines Bisphenol-A-Typ-Epoxidharzes mit einem Molekulargewicht zwischen 300 und 100.000 sowie einem Polyisocyanat bzw. blockiertem Polyisocyanat, pyrogener Kieselsäure sowie mindestens einem organischen Farbpigment. Auch bei diesem Verfahren ist eine chromathaltige Vorbehandlung mit hoher Cr-Auflage erforderlich. Dabei darf die organische Schicht nicht dicker als 2 µm sein, da die Bleche mit dickeren organischen Schichten sich nicht befriedigend Punktschweißen lassen und die Eigenschaften des auf die organische Beschichtung aufgebrachten Elektrotauchlackes negativ beeinflußt werden.

Die WO 99/24515 offenbart eine leitfähige und schweißbare Korrosionsschutz-Zusammensetzung zur Beschichtung von Metalloberflächen, dadurch gekennzeichnet, daß sie
a) 10 bis 40 Gew.-% eines organischen Bindemittels enthaltend
   aa) mindestens ein Epoxidharz
   ab) mindestens einen Härter ausgewählt aus Guanidin, substituierten Guanidinen, substituierten Harnstoffen, cyclischen tertiären Aminen und deren Mischungen
   ac) mindestens ein blockiertes Polyurethanharz
b) 0 bis 15 Gew.-% eines Korrosionsschutzpigments auf Silicatbasis
c) 40 bis 70 Gew.-% pulverförmiges Zink, Aluminium, Graphit und/oder Molybdänsulfid, Ruß, Eisenphosphid
d) 0 bis 30 Gew.-% eines Lösungsmitttels enthalten.

Es bestand die Aufgabe, verbesserte Beschichtungszusammensetzungen bereitzustellen, die den Anforderungen der Automobilindustrie in allen Punkten genügen. Im Vergleich zum bekannten Stand der Technik sollen die für das Coil-Coating-Verfahren geeigneten organischen Beschichtungszusammensetzungen in den folgenden Eigenschaften verbessert werden:
- deutliche Reduzierung des Weißrostes auf verzinktem Stahlblech im Salzsprühtest nach DIN 50021, d.h. besserer Korrosionsschutz
- Verbesserung der Haftung der organischen Beschichtung auf dem metallischen Substrat gemäß einer Bewertung nach dem T-Bend-Test (ECCA-Norm) und Impact-Test (ECCA-Norm)
- Außenhautfähigkeit (d.h. Verwendbarkeit als Außenblech einer Automobilkarosse)
- ausreichender Korrosionsschutz auch bei niedriger Cr-Auflage, vorzugsweise auch bei Cr-freien Vorbehandlungs-Verfahren.
- eine heute noch übliche Hohlraumversiegelung mit Wachs oder wachshaltigen Produkten kann wegen des verbesserten Korrosionsschutzes überflüssig werden
- ausreichende Eignung für automobiltypische Schweißverfahren

Die vorliegende Erfindung betrifft ein Verfahren zur Beschichtung eines Metallgegenstands, dadurch gekennzeichnet, daß man auf zumindest einem Teil der Oberfläche des Metallgegenstands nacheinander folgende Schichten aufbringt:
a) Chemische Konversionsschicht,
b) Leitfähige organische Schicht einer Dicke von 1 bis 10 µm, enthaltend mindestens ein organisches Bindemittel und eine elektrisch leitfähige Substanz,
c) Elektrotauchlack einer Dicke von 25 bis 35 µm
d) ein- oder zweischichtiger Decklack
wobei zwischen dem Elektrotauchlack c) und dem ein- oder zweischichtigen Decklack d) keine Füllerschicht aufgebracht wird.

Im Sinne der Erfindung ist es bevorzugt, dass die leitfähige organische Schicht b) erhalten wird, indem man ein Beschichtungsmittel der Zusammensetzung
i) 10 bis 30 Gew.-% eines organischen Bindemittels, das bei einer Temperatur von 140 bis 159 °C, vorzugsweise zwischen 149 und 159 °C aushärtet,
ii) 30 bis 60 Gew.-% eines Pulvers einer elektrisch leitfähigen Substanz,
iii) 10 bis 40 Gew.-% Wasser sowie
iv) erwünschtenfalls insgesamt bis zu 30 Gew.-% weitere Wirk- und/oder Hilfsstoffe,
wobei sich die Mengen zu 100 Gew.-% addieren,
auf die mit einer chemischen Konversionsschicht a) versehene Metalloberfläche aufbringt und bei einer Peak Metal Temperature im Bereich von 130 bis 159°C aushärtet.

Ferner ist es erfindungsgemäß bevorzugt, dass die leitfähige organische Schicht b) erhalten wird, indem man ein Beschichtungsmittel der Zusammensetzung, bezogen auf die Gesamtzusammensetzung,
i) 5 bis 40 Gew.-% eines organischen Bindemittels enthaltend
   aa) mindestens ein Epoxidharz
   ab) mindestens einen Härter ausgewählt aus Cyanoguanidin, Benzoguanamin, und plastifiziertem Hamstoffharz
   ac) mindestens ein Aminaddukt ausgewählt aus Polyoxyalkylentriamin und Epoxidharz-Aminaddukten
ii) 0 bis 15 Gew.-% eines Korrosionsschutzpigments
iii) 40 bis 70 Gew.-% Leitfähigkeitspigment, ausgewählt aus
   pulverförmigem Zink, Aluminium, Graphit, Molybdänsulfid, Ruß und
   Eisenphosphid
iv) 0 bis 45 Gew.-% eines Lösungsmitttels
sowie erwünschtenfalls bis zu 50 Gew.-% weitere Wirk- oder Hilfsstoffe enthält,
wobei sich die Anteile der Komponenten zu 100 Gew.-% addieren
auf die mit einer chemischen Konversionsschicht a) versehene Metalloberfläche aufbringt und bei Temperaturen zwischen 160 °C und 260 °C Peak Metal Temperature (PMT) aushärtet.

Als elektrisch leitfähig im Sinne dieser Erfindung soll eine Beschichtung verstanden werden, die nach dem Aushärten unter den üblichen Bedingungen der Fügetechnik in der Automobilindustrie schweißbar, vorzugsweise nach dem Punktschweißverfahren schweißbar, ist. Weiterhin besitzen diese Beschichtungen eine ausreichende elektrische Leitfähigkeit, um eine vollständige Abscheidung von Elektrotauchlackierungen zu gewährleisten.

Ein wesentlicher Bestandteil des organischen Bindemittels des erfindungsgemäß bevorzugt einzusetzenden Beschichtungsmittels ist das Epoxidharz. Dabei kann ein Epoxidharz oder eine Mischung mehrerer Epoxidharze Verwendung finden. Das oder die Epoxidharze können dabei ein Molekulargewicht zwischen 300 und 100.000 haben, vorzugsweise finden Epoxidharze mit mindestens 2 Epoxygruppen pro Molekül Verwendung, die ein Molekulargewicht über 700 haben, da die höhermolekularen Epoxide erfahrungsgemäß bei der Applikation zu keinen arbeitshyginischen Problemen führen. Grundsätzlich können eine Vielzahl von Epoxidharzen Verwendung finden, wie z.B. die Glycidylether des Bisphenols A oder die Glycidylether von Novolac-Harzen. Beispiele der erstgenannten Art sind unter den Handelnamen Epicote 1001, Epicote 1004, Epicote 1007, Epicote 1009 der Firma Shell Chemie im Handel. Ebenso wie die vorgenannten Epoxidharze können eine Vielzahl weiterer handelsüblichen Epoxidharze des Bisphenol-A-Glycidylether-Typs eingesetzt werden. Beispiele für Novolac-Epoxidharze sind die Araldit ECN-Typen der Firma Ciba Geigy, die DEN-Typen der Firma Dow Chemical sowie eine Vielzahl weiterer Hersteller.

Weiterhin können Epoxidgruppen-tragende Polyester als Epoxydharz-Bindemittel-Komponente eingesetzt werden, hierzu zählen auch die Epoxy-Derivate von Dimerfettsäuren.

Vorzugsweise sind diese erfindungsgemäß einzusetzenden Epoxidharze im lösungsmittelfreien Zustand bei Raumtemperatur fest. Bei der Herstellung der Zusammensetzung werden sie als Lösung in einem organischen Lösungsmittel eingesetzt.

Als Epoxidharz ist ein Epoxid auf Basis Bisphenol-A-Glycidylether mit einem Molgewicht von mindestens 800 bevorzugt.

Zum Härten des Epoxidharzes enthält das organische Bindemittel bevorzugt mindestens einen Härter ausgewählt aus Cyanoguanidin, Benzoguanamin, plastifiziertem Hamstoffharz und deren Mischungen. Bindemittel und Härter stehen zueinander vorzugsweise in einem Gewichtsverhältnis von 0,8 : 1 bis 7 : 1.

Als weitere Komponente enthält das organische Bindemittel vorzugsweise mindestens ein Aminaddukt ausgewählt aus Polyoxyalkylentriamin und Epoxidharz-Aminaddukten. Selbstverständlich kann das Bindemittel auch ein Gemisch mehrerer solcher Aminaddukte enthalten. Dabei steht die Gesamtmenge des Epoxidharzes zur Gesamtmenge an den genannten Aminaddukten zueinander vorzugsweise in einem Gewichtsverhältnis von 4 : 1 bis 9 : 1, insbesondere von 5 : 1 bis 8 : 1.

Als Komponente ii) können Korrosionsschutzpigmente in einer Menge von bis zu 15 Gew.-% vorliegen. Vorzugsweise enthält die Zusammensetzung 2 bis 10 Gew.-% Korrosionsschutzpigmente, ausgewählt aus dotierten Kieselsäuren, Silicaten zweiwertiger Metalle, insbesondere calciumhaltigen modifizierten Silicaten, Aluminium- und Zinkphosphaten und Modifikationsprodukten hiervon und aus oberflächenmodifiziertem Titandioxid.

Das Beschichtungsmittel enthält bevorzugt als Leitfähigkeitspigment iii) ein Pulver einer elektrisch leitfähigen Substanz, das es erlaubt, die beschichteten Metalloberflächen elektrisch zu verschweißen und elektrophoretisch zu lackieren, beispielsweise durch kathodische Elektrotauchlackierung. Die elektrisch leitfähige Substanz ist vorzugsweise ausgewählt aus jeweils pulverförmigem Zink, Aluminium, Grapht, Ruß, Molybdänsulfid und/oder Eisenphosphid. Vorzugsweise wird pulverförmiges Eisenphosphid eingesetzt, das vorzugsweise eine mittlere Korngröße von nicht mehr als 10 µm aufweist. Ein derartiges Pulver kann durch Vermahlen eines gröberteiligen Pulvers erhalten werden. Vorzugsweise liegt die mittlere Korngröße im Bereich von 2 bis 8 µm. Für die Bestimmung der Korngröße stehen bekannte Methoden wie beispielsweise Lichtstreuung oder Elektronenmikroskopie zur Verfügung.

Vorzugsweise enthält das Beschichtungsmittel weiterhin 0 bis 30 Gew.-% eines Lösungsmittels oder eines Lösungsmittelgemisches, wobei ein Teil dieses Lösungsmittel bzw. Lösungsmittelgemisches bereits durch die Epoxydharzkomponente bzw. andere Komponenten des Bindemittels eingebracht werden kann. Dies gilt insbesondere wenn hierfür handelsübliche Bindemittelkomponenten eingesetzt werden. Als Lösungsmittel eignen sich dabei alle in der Lacktechnik gebräuchlichen Lösungsmittel auf der Basis von Ketonen wie z.B. Methylethylketon, Methylisobutylketon, Methyl-n-amylketon, Ethylamylketon, Acetylaceton, Diacetonalkohol sowie γ-Butyrolactam und N-Alkylierungsprodukte hiervon mit Alkylgruppen mit 1 bis 3 C-Atomen. Weiterhin können aromatische Kohlenwasserstoffe wie Toluol, Xylol oder deren Mischungen eingesetzt werden sowie aliphatische Kohlenwasserstoffmischungen mit Siedepunkten zwischen etwa 80 und 180°C. Weitere geeignete Lösungsmittel sind beispielsweise Ester wie Ethylacetat, n-Butylacetat, Isobutylisobutyrat oder Alkoxyalkylacetate wie Methoxypropylacetat oder 2-Ethoxyethylacetat. Weiterhin seien monofunktionelle Alkohole wie Isopropylalkohol, n-Butanol, Methylisobutylcarbinol oder 2-Ethoxyethanol oder Monoalkylether von Ethylenglycol, Diethylenglycol oder Propylenglycol stellvertretend für viele geeignete Lösungsmittel genannt. Es kann zweckmäßig sein, Mischungen der vorgenannten Lösungsmittel einzusetzen.

Insbesondere kann das Lösungsmittel iv) ausgewählt sein aus Diacetonalkohol, Butyldiglykolacetat, aromatenrreichen Kohlenwasserstoffen, Xylol, 3-Methoxybutylacetat, Methoxyacetoxypropan, Benzylakohol, Butanol und Butyldiglykolacetat.

Als fakultative weitere Wirk- oder Hilfsstoffe kann die Zusammensetzung eine oder mehrere Stoffe ausgewählt aus modifiziertem Rizinusöl, modifizierten Polyethylenwachsen und Polyethersiloxan-Copolymeren enthalten.

Ein besonderer Vorteil des erfindungsgemäß einzusetzenden Beschichtungsmittels besteht darin, daß die organische Bindemittelkomponente frei sein kann von Isocyanaten. Hierdurch werden die mit der Verwendung von Isocyanaten verbundenen gesundheitlichen Risiken vermieden.

Das erfindungsgemäß zu verwendende Beschichtungsmittel ist besonders dafür geeignet, im sogenannten Coil-Coating-Verfahren eingesetzt zu werden. Hierbei werden Metallbänder kontinuierlich beschichtet. Das Mittel kann dabei nach unterschiedlichen Verfahren aufgetragen werden, die im Stand der Technik geläufig sind. Beispielsweise können Auftragswalzen verwendet werden, mit denen sich direkt die erwünschte Naßfilmdicke einstellen läßt. Alternativ hierzu kann man das Metallband in das Mittel eintauchen oder es mit dem Mittel besprühen.

Sofern Metallbänder beschichtet werden, die unmittelbar zuvor mit einer Metallauflage, beispielsweise mit Zink oder Zinklegierungen elektrolytisch oder im Schmelztauchverfahren überzogen wurden, ist eine Reinigung der Metalloberflächen vor dem Auftragen des Mittels nicht erforderlich. Sind die Metallbänder jedoch bereits gelagert worden und insbesondere mit Korrosionsschutzölen versehen, ist ein Reinigungsschritt notwendig. Die erzielbare Korrosionsschutzwirkung läßt sich jedoch verbessern, wenn man die Metalloberfläche vor dem Auftragen des Mittels einer Korrosionsschutz-Vorbehandlung mit anorganischen Reagenzien unterzieht, wie sie im Stand der Technik als "Konversionsbehandlung" bekannt ist. Beispielsweise kann es sich hierbei um eine Phosphatierung handeln, insbesondere eine schichtbildende Zinkphosphatierung, eine Chromatierung oder eine Konversionsbehandlung mit chromfreien Behandlungsmitteln, beispielsweise auf Basis komplexer Fluoride von Titan und/oder Zirkon. Derartige Vorbehandlungsverfahren sind im Stand der Technik bekannt. Wählt man eine Chromatierung als Vorbehandlung, führt man diese vorzugsweise so durch, daß man eine Chromauflage von nicht mehr als 30 mg Chrom pro m², beispielsweise 20 bis 30 mg Chrom pro m² erhält. Höhere Chromauflagen sind nicht erforderlich.

Das erfindungsgemäß einzusetzende Beschichtungsmittel wird vorzugsweise mit einer solchen Naßfilmdicke auf die vorbehandelte Metalloberfläche aufgetragen, daß man nach dem Aushärten eine Schichtdicke im Bereich von etwa 1 bis etwa 10 µm erhält. Vorzugsweise werden Schichtdicken im Bereich um 8 µm, beispielsweise 5 bis 9 µm eingestellt. Man härtet die organische Beschichtung dadurch aus, daß man die beschichtete Metalloberfläche auf eine Objekttemperatur (PMT = peak metal temperature) im Bereich von 160 bis 260°C erhitzt. Die bevorzugte PMT liegt im Bereich von 230 bis 260 °C.

Zum Aushärten der Beschichtung auf dem Substrat wird das beschichtete Substrat so lange aufgeheizt, bis es eine Temperatur in dem genannten Bereich angenommen hat. Dieses Aufheizen kann beispielsweise in einem beheizten Ofen, insbesondere in einem Durchlaufofen erfolgen, der in der Regel eine Temperatur deutlich oberhalb der PMT aufweisen muß und der vorzugsweise mit Umluft betrieben wird. Beispielsweise kann die Ofentemperatur bei 350 °C liegen, wobei die PMT über die Verweildauer des beschichteten Substrats in der Ofenzone gesteuert werden kann. Vorzugsweise verfährt man dabei so, daß man das Substrat nicht längere Zeit auf der PMT hält, sondem es nach Erreichen der PMT sofort abkühlen läßt. Hierfür können aktive Kühlmaßnahmen wie beispielsweise Kühlen mit Wasser oder Abblasen mit Luft vorgesehen werden. Die Zeitdauer bis zum Erreichen der PMT kann dabei bei Anwendung als Coil-Coating-Verfahren unter einer Minute, beispielsweise bei etwa 30 Sekunden liegen.

Die zu beschichtenden Metalloberflächen sind vorzugsweise ausgewählt aus Oberflächen von elektrolytisch oder im Schmelztauchverfahren verzinktem oder legierungsverzinktem Stahl oder aus Aluminium. Beispiele für legierungsverzinkte Stähle sind die Materialien Galvannealed^{R} (Zn/Fe-Legierung), Galfan^{R} (Zn/Al-Legierung) und Zn/Ni-legierungsbeschichteter Stahl.

Bei der Verwendung der erfindungsgemäß beschichteten Metallteile beispielsweise im Fahrzeugbau und in der Haushaltsgeräteindustrie können chemische Behandlungsstufen für die Korrosionsschutzbehandlung der gefertigten Bauteile entfallen. Die zusammengefügten Bauteile, die die erfindungsgemäße Beschichtung tragen, werden unmittelbar überlackiert durch elektrolytische Tauchlackierung. An Stellen, an den keine Überlackierung erfolgt, beispielsweise in Hohlräumen in Fahrzeugkarosserien, weisen die erfindungsgemäß beschichteten Metallteile eine ausreichend hohe Korrosionsbeständigkeit auf. Aufwendige Arbeitsschritte wie beispielsweise eine Hohlraumkonservierung können hierdurch entfallen. Dies vereinfacht zum einen die Fertigungsprozesse im Fahrzeugbau und führt gegenüber einer konventionellen Hohlraumversiegelung zu einer Gewichtsersparnis und damit zu einem geringeren Treibstoffverbrauch.

Ein Vorteil des erfindungsgemäß beschichteten Materials besteht darin, daß es für den Fahrzeugbau "außenhautfähig" ist. Die Zahl der erreichbaren Schweißpunkte pro Elektrode beim elektrischen Widerstands-Punktschweißen ist höher als bei denjenigen Beschichtungen, die eingangs als Stand der Technik zitiert sind. Bei der Anwendung auf dem als spröde und schlecht durch Pressen umformbar bekannten Material Galvannealed zeigt sich ein sehr gutes Preßverhalten, so daß beim Pressen weniger Abrieb entsteht. Weiterhin wird das bei der kathodischen Elektrotauchlackierung von Galvannealed bekannte "Cratering" (Fehlstellen im Lack) verhindert.

Die nach dem erfindungsgemäßen Verfahren hergestellte leitfähige organische Schicht bietet also die Basis für eine weitere Überlackierung, wie sie im allgemeinen im Metallbau üblich ist.

Im Fahrzeugbau bevorzugt man derzeit wegen der höheren mechanischen und korrosiven Beanspruchtung ein Mehrschichtsystem, bei dem auf eine chemische Konversionsschicht eine unterschiedliche Abfolge organischer Beschichtungen folgt. In diese Abfolge kann eine leitfähige organische Schicht als erste organische Schicht oberhalb der Konversionsschicht folgen. Hierauf kann ein im Vergleich zum bisherigen Stand der Technik vereinfachter Schichtaufbau aus einem Elektrotauchlack und einem ein- oder zweischichtigen Decklack folgen. Da das Grundmaterial bereits mit der leitfähigen organischen Schicht angeliefert wird, vereinfachen sich beim Hersteller der Fahrzeuge die bisher erforderlichen Schritte zum Erzeugen der chemischen Konversionsschicht und dem Aufbringen der verschiedenen organischen Überzüge.

Die vorliegende Erfindung umfasst damit ebenfalls einen Metallgegenstand, der auf der Metalloberfläche ein Beschichtungssystem aus folgenden Einzelschichten aufweist:
a) Chemische Konversionsschicht,
b) Leitfähige organische Schicht einer Dicke von 1 bis 10 µm, enthaltend mindestens ein organisches Bindemittel und eine elektrisch leitfähige Substanz,
c) Elektrotauchlack einer Dicke von 25 bis 35 µm.
d) ein- oder zweischichtiger Decklack,
wobei zwischen dem Elektrotauchlack c) und dem ein- oder zweischichtigen Decklack d) keine Füllerschicht vorhanden ist, und der nach einem oder mehreren der Ansprüche 1 bis 3 erhältlich ist.

Bisher war es im Stand der Technik nicht üblich, einen Elektrotauchlack auf eine organische Schicht aufzubringen. Erfindungsgemäß ist vorgesehen, daß der Elektrotauchlack mit einer Dicke im Bereich von 25 bis 35 µm auf die leitfähige organische Schicht aufgebracht wird. Dies ist eine deutlich höhere Schichtdicke als im Stand der Technik üblich, wo ein Elektrotauchlack einer Dicke im Bereich von 20 µm direkt auf einer chemischen Konversionsschicht abgeschieden wird. Im bisherigen Stand der Technik folgt auf den Elektrotauchlack ein Füller und erst dann ein ein- oder zweischichtiger Decklack. Gemäß der vorliegenden Erfindung kann der Füller eingespart werden, da dessen Funktion (insbesondere die Erhöhung der Steinschlagfestigkeit) von dem Elektrotauchlack übernommen wird. Daher kann ein Lackierschritt eingespart werden. Darüber hinaus ist das gesamte Beschichtungssystem gemäß der vorliegenden Erfindung dünner als im Stand der Technik üblich. Hierdurch wird Material eingespart, was zu ökonomischen und ökologischen Vorteilen führt.

Der Decklack kann ein- oder zweischichtig ausgeführt sein. Bei zweischichtiger Ausführung besteht er aus einem sogenannten Basecoat, der vor allem für den optischen Eindruck des Beschichtungssystems sorgt, und einem Clearcoat, der im wesentlichen Schutzfunktion hat und durch den der Basecoat sichtbar ist.

Im vorstehend beschriebenen Fäll kann es sich bei der chemischen Konversionsschicht um eine Beschichtung handeln, die durch eine weiter oben beschriebene Konversionsbehandlung erzeugt wird, beispielsweise durch eine Phosphatierung, eine Chromatierung oder eine Konversionsbehandlung mit chromfreien Behandlungsmitteln. Als leitfähige organische Schicht b) kann eine Schicht vorliegen, wie sie nach dem vorstehend beschriebenen erfindungsgemäßen Verfahren erhältlich ist. Aus der nicht vorveröffentlichten DE 199 51 133 ist ein weiteres Verfahren bekannt, eine leitfähige organische Schicht aufzubringen. Die dort beschriebene Schicht hat den Vorteil, bei einer Temperatur (PMT) im Bereich von 130 bis 159 °C auszuhärten. Daher ist sie auch für die sogenannten bake-hardening-Stähle einsetzbar.

### Beispiele

Die nachstehende Tabelle zeigt beispielhafte Zusammensetzungen. Probebleche aus elektrolytisch verzinktem Stahl, die einer technisch üblichen Chromatierung unterzogen werden und bei denen die leitfähige organische Beschichtung bei einer PMT von 235 - 250°C zu einer Schicht mit einer Dicke im Bereich 5 bis 9 µm ausgehärtet wird, ergeben bei praxisüblichen Anwendungstests folgende Ergebnisse: Lösemittelbeständigkeit nach dem Methylethylketon-Test in Anlehnung an DIN 53339: mehr als 10 Doppelhübe; Korrosionserscheinungen nach 10 Zyklen Wechselklimatest gemäß VDA 621-415: Rotrost im Flansch: r0, Lackunterwanderung am Ritz (halbe Ritzbreite) < 1,5 mm.

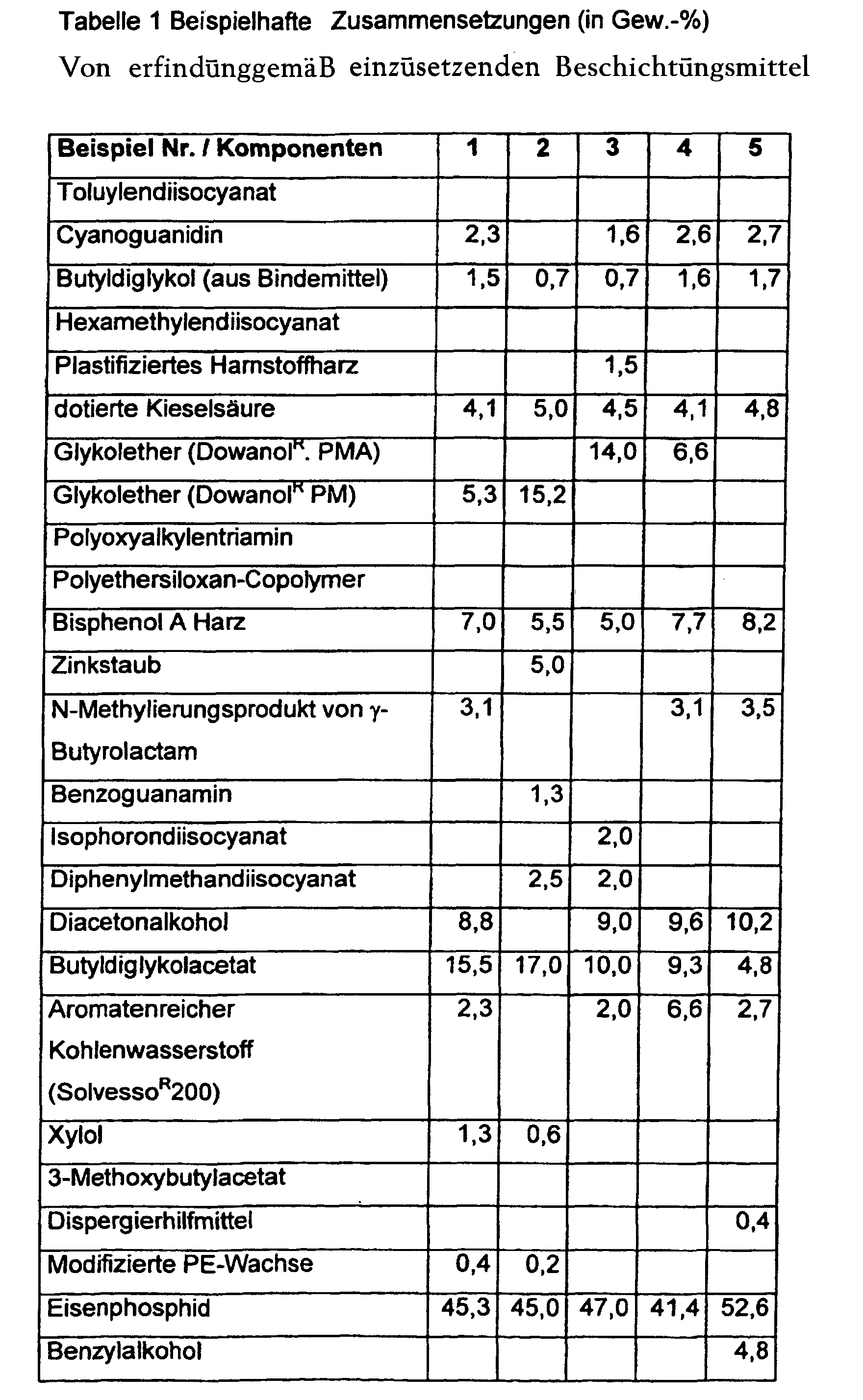

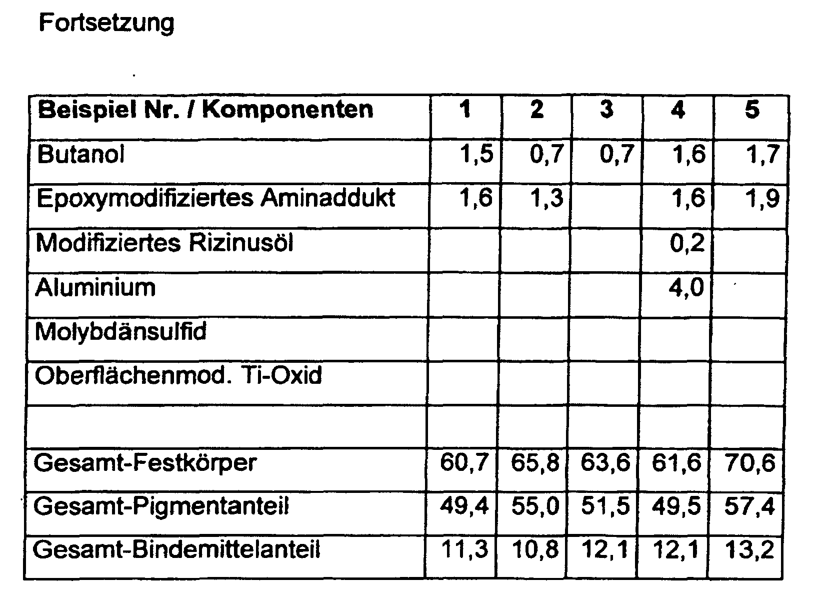

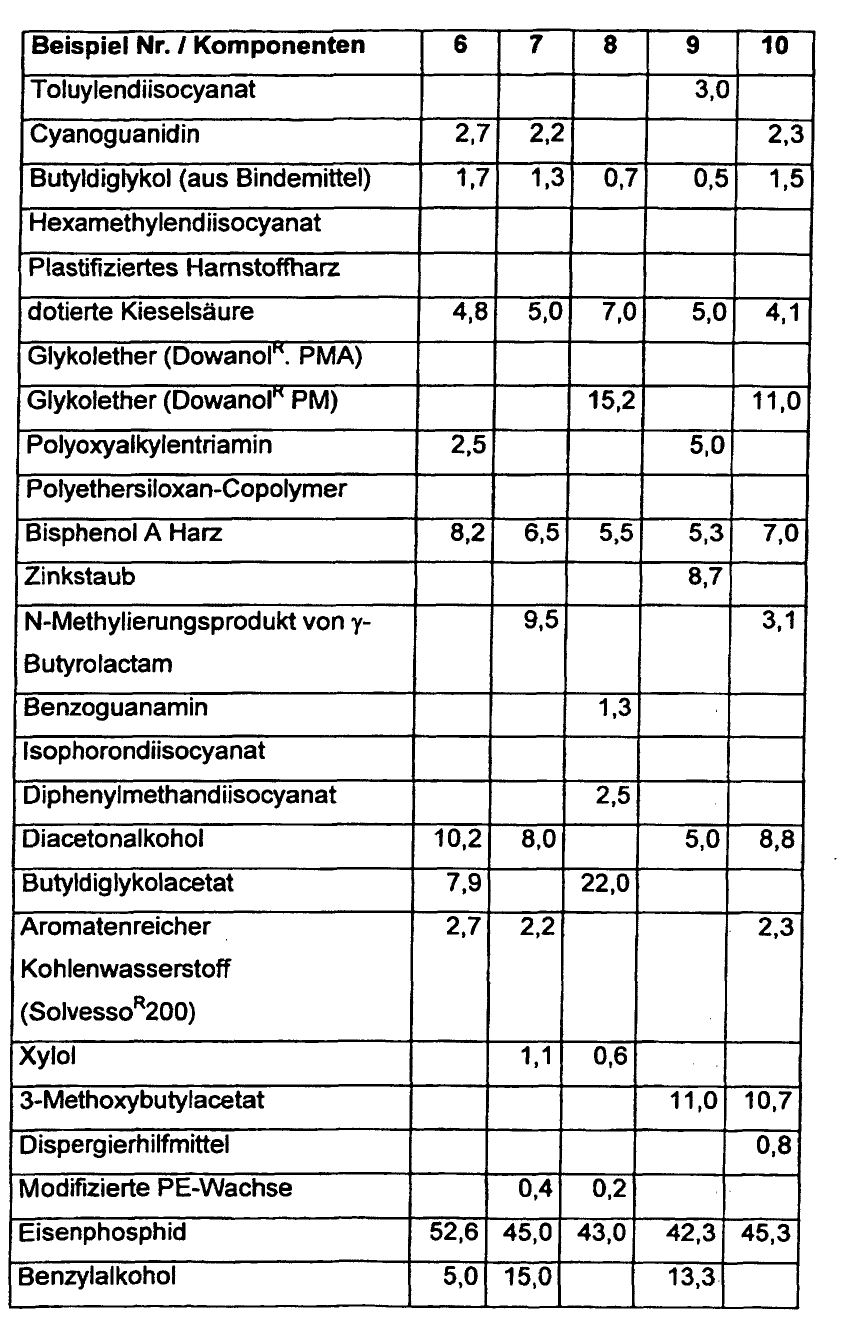

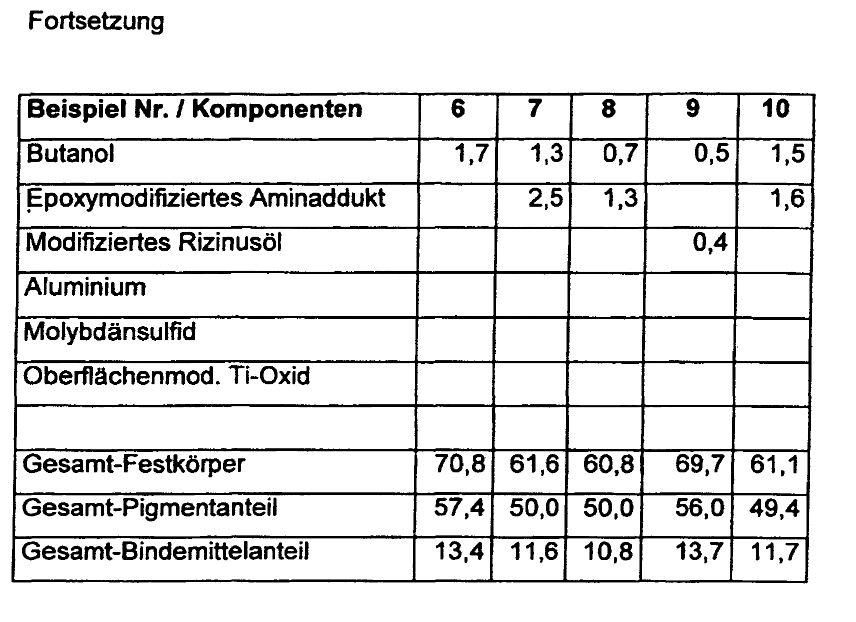

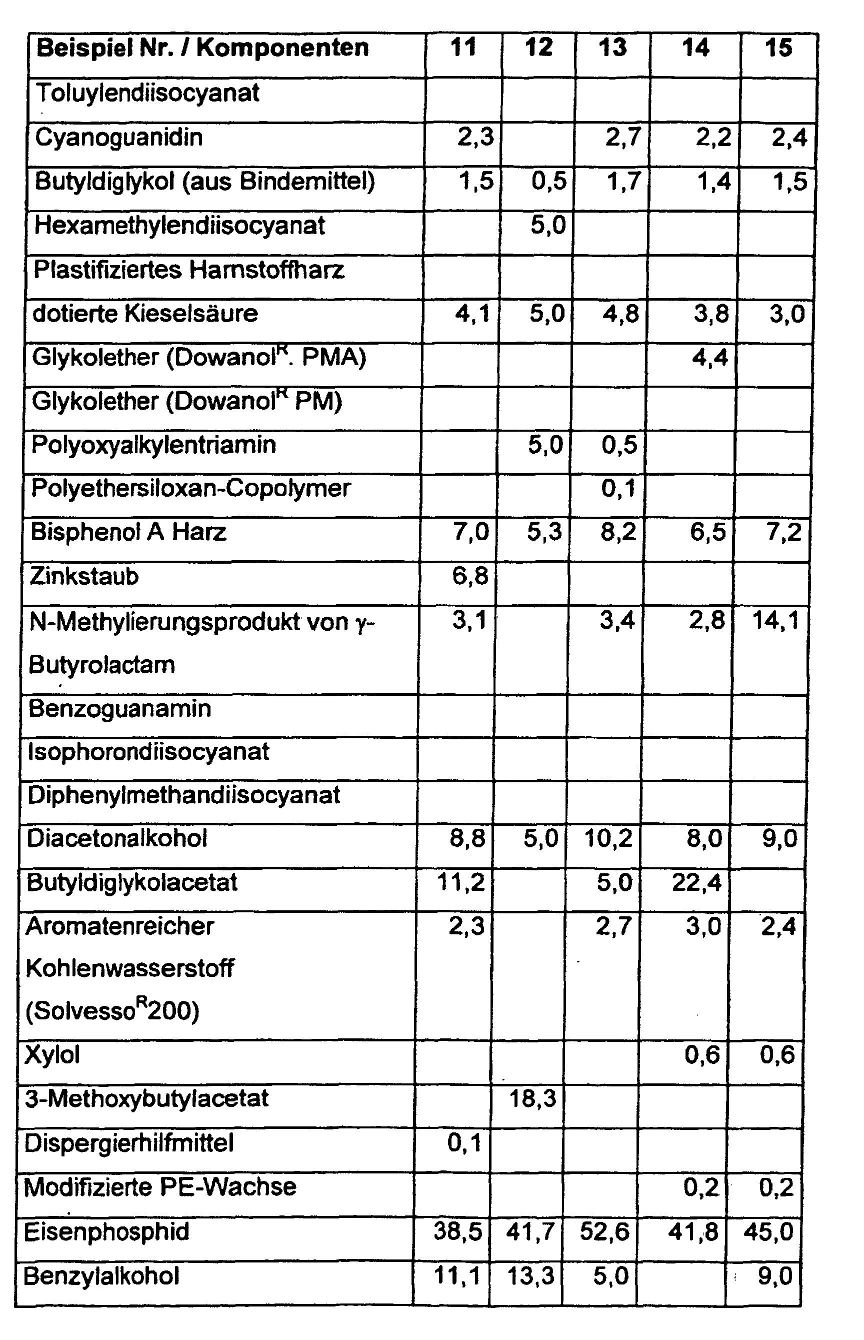

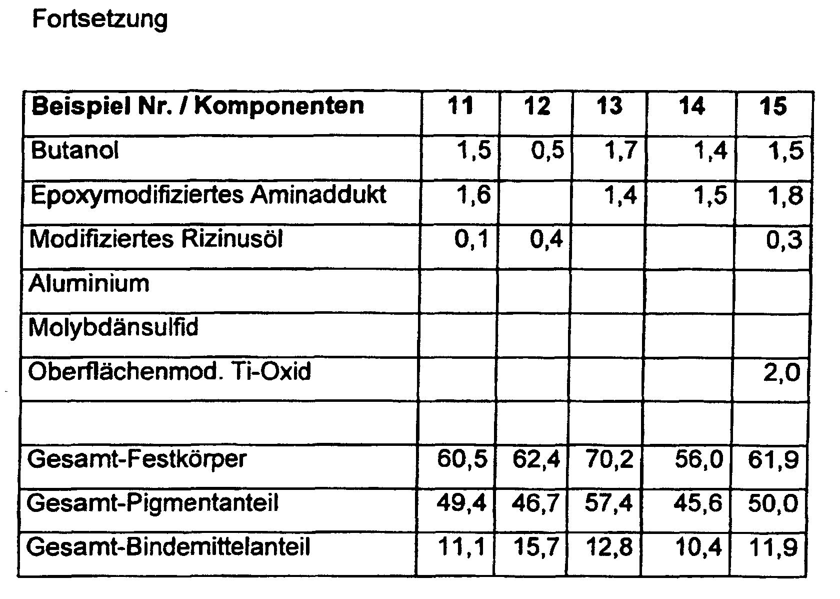

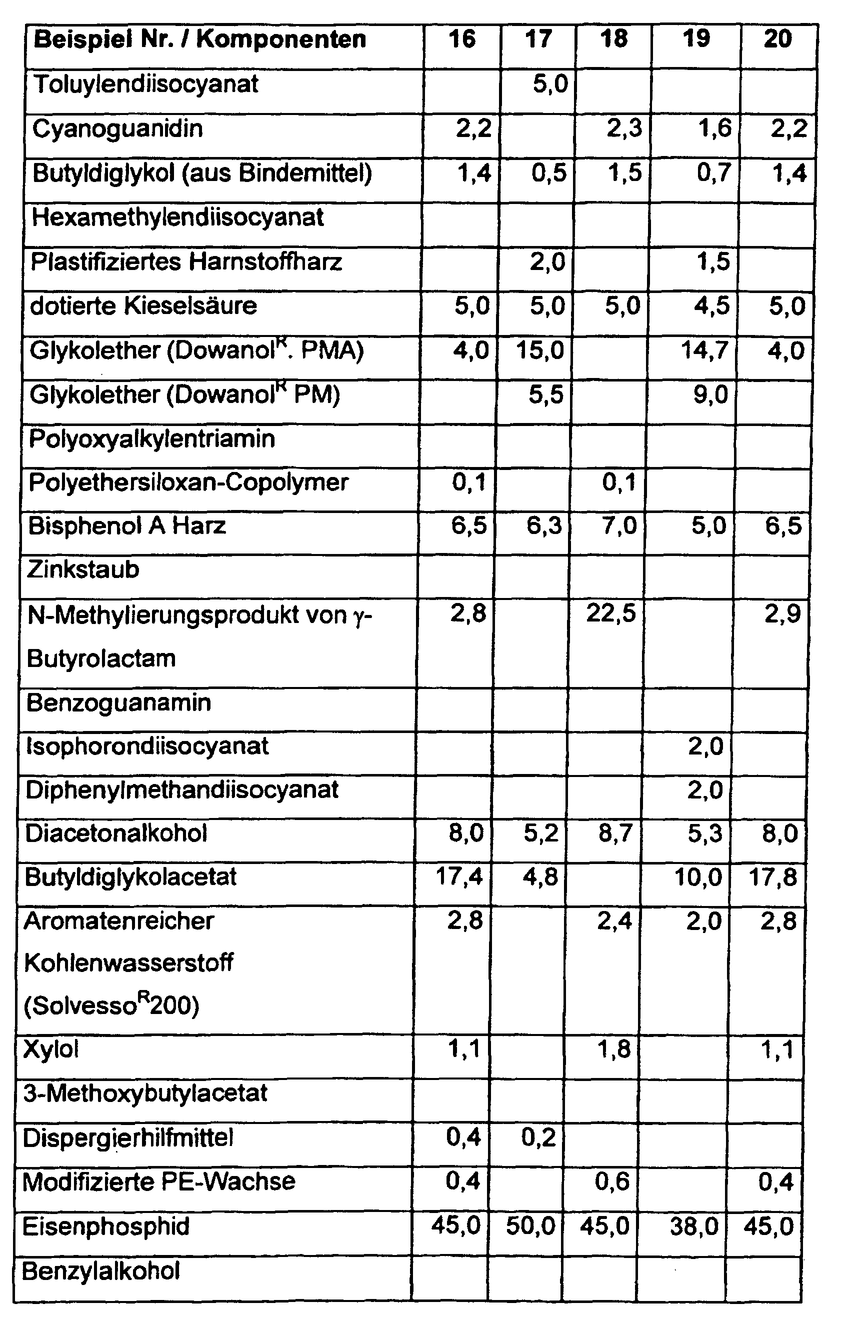

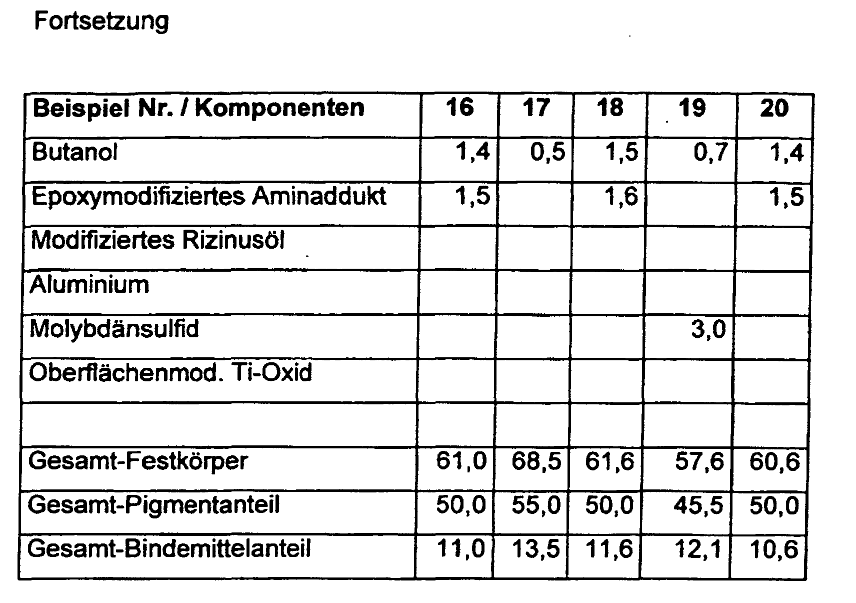

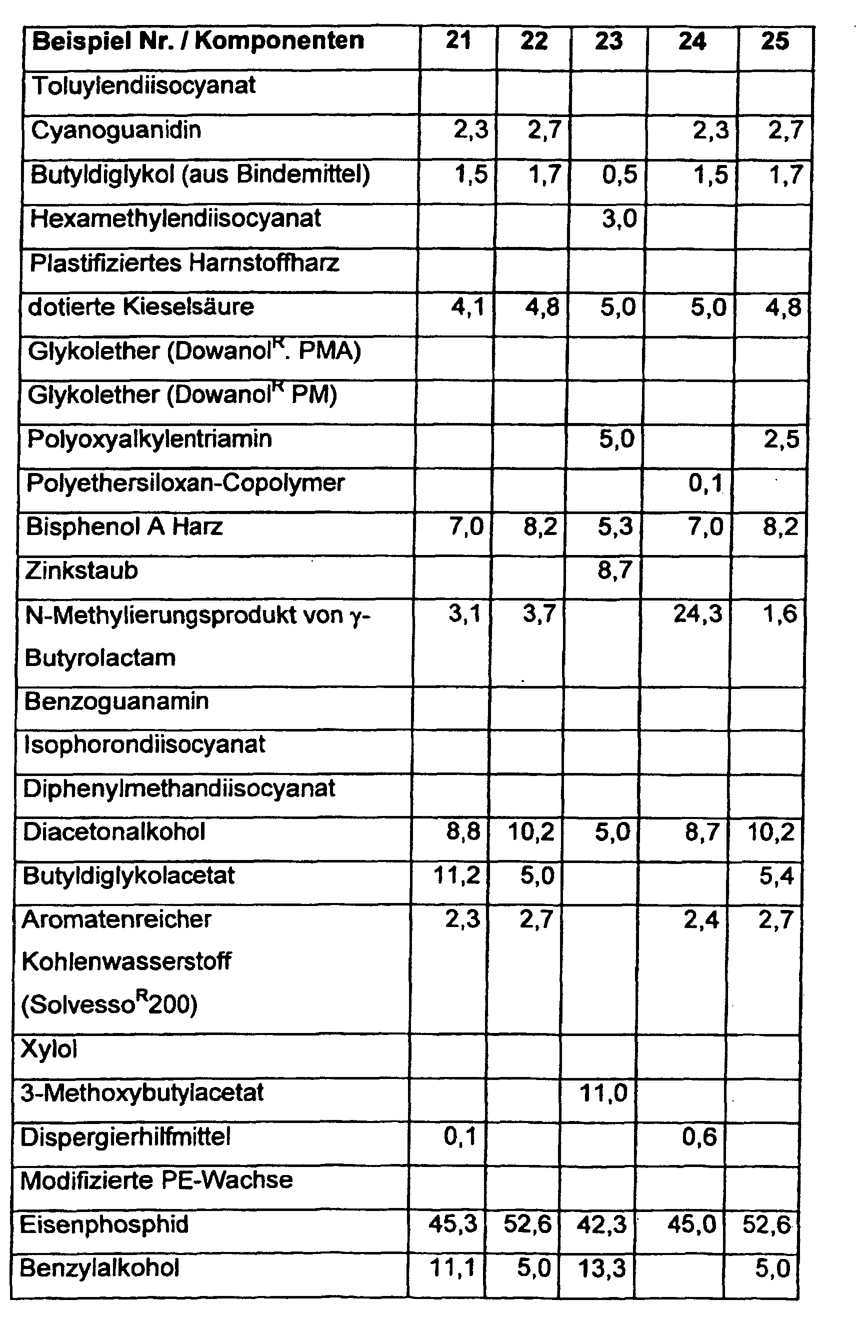

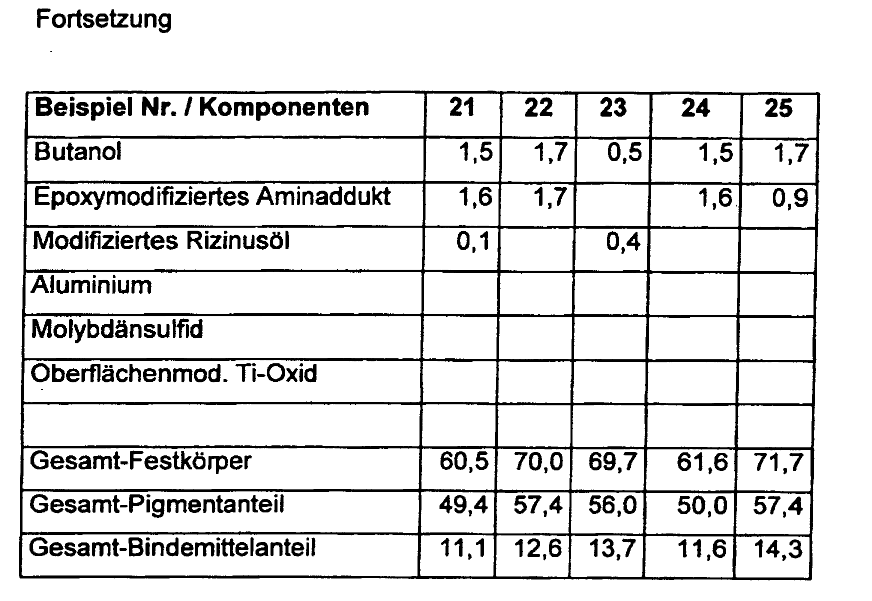

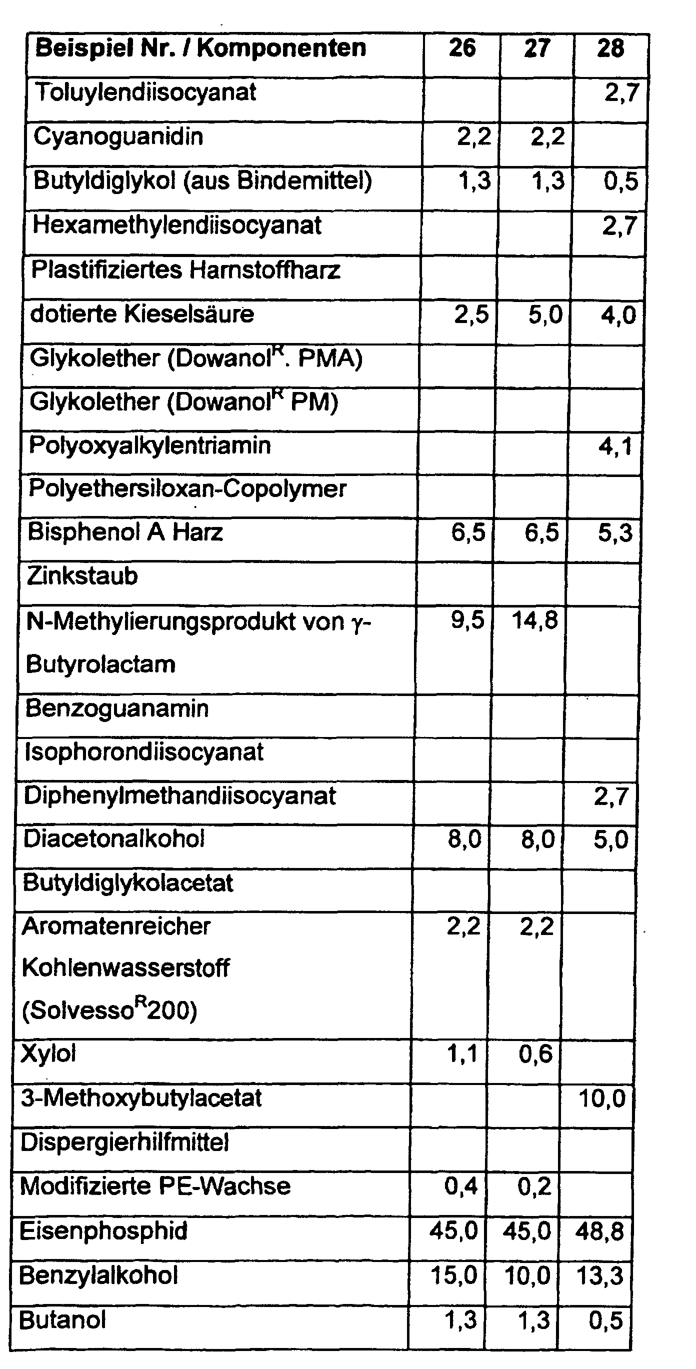

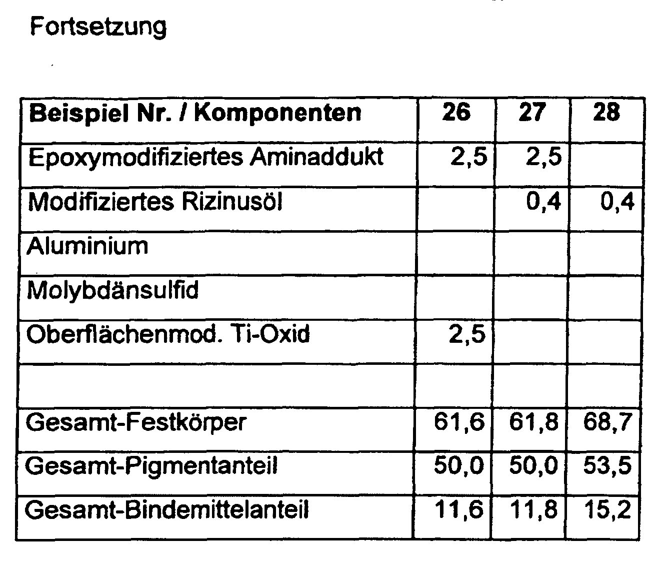

## Patentansprüche

1. Verfahren zur Beschichtung eines Metallgegenstands, **dadurch gekennzeichnet, daß** man auf zumindest einem Teil der Oberfläche des Metallgegenstands nacheinander folgende Schichten aufbringt:
a) Chemische Konversionsschicht,
b) Leitfähige organische Schicht einer Dicke von 1 bis 10 µm, enthaltend mindestens ein organisches Bindemittel und eine elektrisch leitfähige Substanz,
c) Elektrotauchlack einer Dicke von 25 bis 35 µm
d) ein- oder zweischichtiger Decklack
wobei zwischen dem Elektrotauchlack c) und dem ein- oder zweischichtigen Decklack d) keine Füllerschicht aufgebracht wird.

2. Verfahren nach Anspruch 1, **dadurch gekennzeichnet, dass** die leitfähige organische Schicht b) erhalten wird, indem man ein Beschichtungsmittel der Zusammensetzung
i) 10 bis 30 Gew.-% eines organischen Bindemittels, das bei einer Temperatur von 140 bis 159 °C, vorzugsweise zwischen 149 und 159 °C aushärtet,
ii) 30 bis 60 Gew.-% eines Pulvers einer elektrisch leitfähigen Substanz,
iii) 10 bis 40 Gew.-% Wasser sowie
iv) erwünschtenfalls insgesamt bis zu 30 Gew.-% weitere Wirk- und/oder Hilfsstoffe,
wobei sich die Mengen zu 100 Gew.-% addieren,
auf die mit einer chemischen Konversionsschicht a) versehene Metalloberfläche aufbringt und bei einer Peak Metal Temperature im Bereich von 130 bis 159 °C aushärtet.

3. Verfahren nach Anspruch 1, **dadurch gekennzeichnet, dass** die leitfähige organische Schicht b) erhalten wird, indem man ein Beschichtungsmittel der Zusammensetzung
bezogen auf die Gesamtzusammensetzung,
i) 5 bis 40 Gew.-% eines organischen Bindemittels enthaltend
aa) mindestens ein Epoxidharz
ab) mindestens einen Härter ausgewählt aus Cyanoguanidin, Benzoguanamin, und plastifiziertem Hamstoffharz
ac) mindestens ein Aminaddukt ausgewählt aus Polyoxyalkylentriamin und Epoxidharz-Aminaddukten
ii) 0 bis 15 Gew.-% eines Korrosionsschutzpigments
iii) 40 bis 70 Gew.-% Leitfähigkeitspigment, ausgewählt aus
pulverförmigem Zink, Aluminium, Graphit, Molybdänsulfid, Ruß und
Eisenphosphid
iv) 0 bis 45 Gew.-% eines Lösungsmitttels
sowie erwünschtenfalls bis zu 50 Gew.-% weitere Wirk- oder Hilfsstoffe enthält,
wobei sich die Anteile der Komponenten zu 100 Gew.-% addieren
auf die mit einer chemischen Konversionsschicht a) versehene Metalloberfläche aufbringt und bei Temperaturen zwischen 160°C und 260 °C Peak Metal Temperature (PMT) aushärtet.

4. Metallgegenstand, der auf der Metalloberfläche ein Beschichtungssystem aus folgenden Einzelschichten aufweist:
a) Chemische Konversionsschicht,
b) Leitfähige organische Schicht einer Dicke von 1 bis 10 µm, enthaltend mindestens ein organisches Bindemittel und eine elektrisch leitfähige Substanz,
c) Elektrotauchlack einer Dicke von 25 bis 35 µm,
d) ein- oder zweischichtigen Decklack,
wobei zwischen dem Elektrotauchlack c) und dem ein- oder zweischichtigen Decklack d) keine Füllerschicht vorhanden ist, und der nach einem oder mehreren der Ansprüche 1 bis 3 erhältlich ist.

## Claims

1. A process for coating a metal object, **characterised in that** the following layers are applied in sequence to at least part of the surface of the metal object:
(a) a chemical conversion layer,
(b) a conductive organic layer having a thickness of 1 to 10 *µ*m, containing at least an organic binder and an electrically conductive substance,
(c) an electrodeposition lacquer having a thickness of 25 to 35 *µ*m,
(e) one or two layers of topcoat,
wherein no filler is applied between the electrodeposition layer (c) and the one or two layers of topcoat (d).

2. A process according to claim 1, **characterized in that** the conductive organic layer (b) is obtained by applying a coating agent having the composition:
(i) 10 to 30 wt. % of an organic binder which cures at a temperature of 140 to 159°C, preferably between 149 and 159°C,
(ii) 30 to 60 wt. % of a powder of an electrically conductive substance,
(iii) 10 to 40 wt. % of water and
(v) if required, a total of up to 30 wt. % of other active and/or auxiliary substances,
wherein the amounts total 100 wt. %,
to the metal surface provided with the chemical conversion layer (a), and curing at a peak metal temperature in the range 130 to 159°C.

3. A process according to claim 1, **characterized in that** the conductive organic layer (b) is obtained by applying a coating agent having the composition, based on the total composition:
(i) 5 to 40 wt. % of an organic binder containing:
(aa) at least one epoxide resin
(ab) at least one hardener selected from cyanoguanidine, benzoguanamine and plasticised urea resin
(ac) at least one amine adduct selected from polyoxyalkylenetriamine and epoxide resin/amine adducts
(ii) 0 to 15 wt. % of an anti-corrosion pigment
(iii) 40 to 70 wt. % of a conductive pigment selected from powdered zinc, aluminum, graphite, molybdenum sulfide, carbon black and iron phosphide
(iv) 0 to 45 wt. % of a solvent,
and, if required, up to 50 wt. % of other active or auxiliary substances, wherein the proportions of the components total 100 %
to the metal surface provided with the chemical conversion layer (a), and curing at a peak metal temperature in the range 160 to 260°C.

4. A metal object which has, on the metal surface, a coating system consisting of the following individual layers:
(a) a chemical conversion layer;
(b) a conductive organic layer having a thickness of 1 to 10 *µ*m, containing at least an organic binder and an electrically conductive substance,
(c) an electrodeposition lacquer having a thickness of 25 to 35 *µ*m
(d) one or two layers of topcoat,
wherein no filler is present between the electrodeposition lacquer (c) and the one or two layers of topcoat (d), and which may be obtained according to one ore more of claims 1 to 3.

## Revendications

1. Procédé pour l'enduction d'un objet métallique, **caractérisé en ce qu'**on applique, sur au moins une partie de la surface de l'objet métallique, sous la forme de couches successives :
a) une couche de conversion chimique,
b) une couche organique conductrice possédant une épaisseur de 1 à 10 µm, contenant au moins un liant organique et une substance électricoconductrice,
c) une couche de peinture électrophorétique par immersion possédant une épaisseur de 25 à 35 µm,
d) une ou deux couches d'émail de finition,
aucune couche de remplissage n'étant appliquée entre la couche de peinture électrophorétique par immersion c) et la couche ou les deux couches d'émail de finition d).

2. Procédé selon la revendication 1, **caractérisé en ce qu'**on obtient la couche organique conductrice b) en appliquant un agent d'enduction possédant la composition ci-après
i) à concurrence de 10 à 30 % en poids, un liant organique qui durcit à une température de 140 à 159°C, de préférence entre 149 et 159°C,
ii) à concurrence de 30 à 60 % en poids, une poudre d'une substance électroconductrice,
iii) à concurrence de 10 à 40 % en poids, de l'eau, et
iv) si on le souhaite, au total jusqu'à concurrence de 30 % en poids, d'autres substances actives et/ou d'autres adjuvants,
les quantités s'additionnant pour obtenir 100 % en poids,
sur la surface métallique munie d'une couche de conversion chimique a) et on durcit à une température pic-métal dans la plage de 130 à 159°C.

3. Procédé selon la revendication 1, **caractérisé en ce que** l'on obtient la couche organique conductrice b) **en ce qu'**on applique un agent d'enduction possédant la composition,
rapportée à la composition totale, ci-après
i) à concurrence de 5 à 40 % en poids, un liant organique contenant
aa) au moins une résine époxyde
ab) au moins un durcisseur choisi parmi le groupe comprenant la cyanoguanidine, la benzoguanamine et une résine uréique plastifiée
ac) au moins un adduit d'amine choisi parmi le groupe comprenant de la polyoxyalkylènetriamine et des adduits de résines époxydes-amines
ii) à concurrence de 0 à 15 % en poids, un pigment de protection contre la corrosion
iii) à concurrence de 40 à 70 % en poids, un pigment conférant une conductibilité choisi parmi le groupe comprenant du zinc, de l'aluminium, du graphite, du sulfure de molybdène, du noir de carbone pulvérulents
et
du phosphure de fer
iv) à concurrence de 0 à 45 % en poids, un solvant
et, si on le souhaite, jusqu'à concurrence de 50 % en poids, d'autres substances actives ou d'autres adjuvants,
les fractions des composants s'additionnant pour obtenir 100 % en poids, sur la surface métallique munie d'une couche de conversion chimique a) et on durcit à une température pic-métal (PMT) entre 160°C et 260°C.

4. Objet métallique qui présente, sur la surface métallique, un système d'enduction constitué par les couches individuelles suivantes
a) une couche de conversion chimique
b) une couche organique conductrice possédant une épaisseur de 1 à 10 µm, contenant au moins un liant organique et une substance électricoconductrice,
c) une couche de peinture électrophorétique par immersion possédant une épaisseur de 25 à 35 µm,
d) une ou deux couches d'émail de finition,
aucune couche de remplissage n'étant présente entre la couche de peinture électrophorétique par immersion c) et la couche ou les deux couches d'émail de finition d), et que l'on obtient conformément à une ou plusieurs des revendications 1 à 3.
